(19) Europäisches Patentamt
European Patent Office
Office européen des brevets

(11) Publication number: 0 132 963
A1

# (12) EUROPEAN PATENT APPLICATION

(21) Application number: **84304477.7**

(22) Date of filing: **29.06.84**

(51) Int. Cl.[4]: **A 01 N 33/12**
A 01 N 43/40
//(A01N33/12, 29/04, 29/02, 27/00), (A01N43/40, 29/04, 29/02, 27/00)

(30) Priority: **30.06.83 GB 8317756**

(43) Date of publication of application: **13.02.85 Bulletin 85/7**

(84) Designated Contracting States: **BE DE FR GB IT NL**

(71) Applicant: **A.B.M. CHEMICALS LIMITED**
**Wortley Low Mills Whitehall Road**
**Leeds LS12 4RF(GB)**

(72) Inventor: **Davis, Brian**
**3 Stone Cross Drive**
**Sprotborough Doncaster, DN5 7QH(GB)**

(72) Inventor: **Jordan, Peter**
**22 Cliffe Park Rise**
**Leeds LS12 4XF(GB)**

(74) Representative: **Pennant, Pyers et al,**
**Stevens, Hewlett & Perkins 5 Quality Court Chancery Lane**
**London, WC2A 1HZ(GB)**

## (54) Quaternary ammonium germicides.

(57) A germicidal composition, showing enhanced germicidal action, comprises a mixture of a quaternary ammonium compound and a hydrocarbon or halocarbon, or a mixture of hydrocarbons and halocarbons. The nature of the germicidal agent is not critical and any quaternary ammonium compound having germicidal properties may be employed. The hydrocarbon and/or halocarbon comprises any low molecular weight aliphatic, cycloaliphatic or aromatic compound which enhances germicidal activity.

EP 0 132 963 A1

Croydon Printing Company Ltd.

# QUATERNARY AMMONIUM GERMICIDES

The invention relates to an efficient disinfectant composition comprising a biocidal agent.

Disinfectants or germicides are very widely used, and two classes may be mentioned. Phenolic compounds have only limited solubility in water and are therefore used in the form of aqueous emulsions. Long-chain quaternary ammonium compounds generally have sufficient solubility to be used in aqueous solution. Since the organism to be killed is hydrophilic, it is generally accepted that the germicide should be presented in a hydrophilic,rather than a hydrophobic, medium.

This invention is based on the surprising discovery that the germicidal activity of quaternary ammonium compounds can be enhanced by a factor of between two and three or even more in the presence of hydrocarbons or halocarbons,or mixtures of these. The invention therefore provides a germicidal composition, showing enhanced germicidal action, comprising a mixture of a quaternary ammonium compound and a hydrocarbon or halocarbon, or mixture of hydrocarbons and halocarbons.

The nature of the germicidal agent is not critical, and any quaternary ammonium compound having germicidal properties may be used. In particular, compounds having three methyl groups and one long-chain hydrocarbon group attached to nitrogen are suitable, for example dodecylbenzyl trimethyl ammonium chloride sold by us under the trade name Gloquat C. Other quaternary ammonium compounds include benzalkonium chloride (Morpan BC), tetradecyl pyridinium bromide (Morpan TPB) and Cetrimide B.P. (Morpan CHSA).

The hydrocarbon may comprise any low molecular weight aliphatic, cycloaliphatic or aromatic hydrocarbon which enhances germicidal activity. Suitable hydrocarbons include: hexane, cyclohexane, toluene and tetralin. In a preferred embodiment, the solvent comprises tetralin. It is envisaged that the hydrocarbon may comprise a mixture of low and high molecular weight hydrocarbons. Satisfactory results have also been obtained with Shellsol R and Coalite Aromatic Oil 131C. The halocarbon may comprise a low molecular weight halogenated aliphatic, cycloaliphatic or aromatic hydrocarbon, for example a chlorinated paraffin, such as trichlorethane, or a chlorinated aromatic hydrocarbon, such as chlorobenzene, or a mixture of chlorinated paraffin and chlorinated aromatic hydrocarbon.

The quaternary ammonium compound and the hydrocarbon or halocarbon are preferably present in the mixture in a weight ratio of from 1:19 to 4:1, particularly from 1:9 to 1:2. This ratio is not very critical, but if too little hydrocarbon or halocarbon is used, the germicidal effect of the quaternary ammonium compound is not significantly enhanced and too much hydrocarbon or halocarbon does not further potentiate the germicide. The hydrocarbon or halocarbon does not itself exert any significant germicidal action.

The composition may contain a surface active agent to ensure that a stable emulsion is formed in water. Other conventional ingredients may be present in conventional amounts, for example colours, scents, preservatives and buffers.

The composition may be supplied without added water, consisting essentially of the mixture of quaternary ammonium compound and hydrocarbon or halocarbon. Or it may be supplied as a concentrated aqueous emulsion or suspension for dilution prior to use. Prior to use, such compositions are diluted with water, e.g.

to a quaternary ammonium compound concentration by weight of 1:100 to 1:2000.

It is considered desirable that, upon dilution with water, the composition forms a stable emulsion and preferably the emulsion stability satisfies the British Standard Specification for Black and White Disinfectant Fluids (BS 2462:1961). However, investigations indicate that the quality of the emulsion formed in water does not appear to influence the biocidal activity and so compositions which form a poor emulsion may also find useful applications.

Germicidal compositions according to the invention are far more efficient than compositions based on the same biocidal agent but not containing any hydrocarbon or halocarbon. This new component has a definite synergistic effect on the activity of the biocidal agent. For example, in the preferred composition the presence of tetralin increases the biocidal effectiveness of Gloquat C by a factor of three.

The reason for this synergistic effect is at present unknown. It appears that the property is possessed by low molecular weight aliphatic and aromatic hydrocarbons and halocarbons.

The following examples are included to illustrate the invention.

In each of Examples 1-9 germicidal compositions were prepared according to the following general formulation:

| | % ( by weight ) |
|---|---|
| Gloquat C | 20 |
| Texofor M6 | 8 |
| Pine Oil | 5 |
| Hydrocarbon/halocarbon | 67 |

That is, in each of these examples only the hydrocarbon/halocarbon component was varied.

After shaking, each composition was tested for biocidal effectiveness using the British Standard test BS: 6471 for QAC disinfectant formulations(Appendix I). The appearance of the formulation was also noted. Finally, the appearance and stability of a 5% emulsion in hard water (200 ppm $CaCo_3$)was noted over a period of 6 hours. The results obtained being compared to the Black & White Disinfectant Fluids Specification BS 2462:1961 (Appendix II).

The results obtained are shown in Examples 1-9 :

Example 1

Hydrocarbon: None

Chemical type: -

Bactericidal figure: 1:500

Appearance of formulation: -

Emulsion appearance: -

Emulsion appearance after 6 hrs: -

Example 2

Hydrocarbon:Hexane

Chemical type:$C_6H_{14}$

Bactericidal figure: 1:1500

Appearance of formulation: Separates. Some thickening.

Emulsion appearance: Poor thin white.

Emulsion appearance after 6 hrs: Poor white. Top cream (½ ml).

Example 3

Hydrocarbon:Cyclohexane

Chemical type: $C_6H_{12}$

Bactericidal figure: 1:1500

Appearance of formulation: Slight haze. No separation. Thickened.

Emulsion appearance: Good white, quite dense.

Emulsion appearance after 6 hrs: Good white, no separation.

Example 4

Hydrocarbon: Toluene

Chemical type: 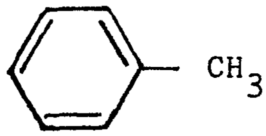

Bactericidal figure: 1:1000

Appearance of formulation: Clear soln., no separation. Slight thickening.

Emulsion appearance: Good white, quite dense.

Emulsion appearance after 6 hrs: Good white, no separation.

Example 5

Hydrocarbon: Tetralin

Chemical type: 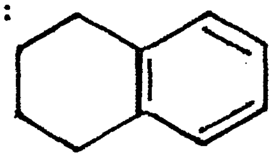

Bactericidal figure: 1:1250;1:1500.

Appearance of formulation: Clear pale brown liquid. Goes dark green/black. No thickening.

Emulsion appearance: Very dense grey/white creamy emulsion.

Emulsion appearance after 6 hrs: Very dense creamy grey/white.No separation.

Example 6

Hydrocarbon: Coalite Aromatic Oil 131C

Chemical type: Thought to be aliphatic. Mol. wt. not known.

Bactericidal figure: 1:1250

Appearance of formulation: Black solution.No separation.

Emulsion appearance: Good pale brown/yellow emulsion.

Emulsion appearance after 6 hrs: Pale brown/yellow,quite dense.Bottom oil (1½ ml.)

Example 7

Hydrocarbon: Shellsol R

Chemical type: High boiling 203-263°C. 84% Aromatic.

Bactericidal figure: 1:1000

Appearance of formulation: Hazy solution.Separates on standing.

Emulsion appearance: Very dense white.

Emulsion appearance after 6 hrs: Very dense white. No separation.

Example 8

Chlorinated hydrocarbon: 1,1,1-trichlorethane

Chemical type: $CH_3CCl_3$

Bactericidal figure: 1:1000

Appearance of formulation: Clear yellow liquid

Emulsion appearance: Very thin emulsion.

Example 9

Chlorinated hydrocarbon: Monochlorobenzene

Chemical type: $C_6H_5Cl$

Bactericidal figure: 1:1500

Appearance of formulation: Clear yellow liquid

Emulsion appearance: Good white emulsion.

The results obtained in the above examples illustrate that both aliphatic and aromatic low molecular weight hydrocarbons and halocarbons increase the biocidal effectiveness of Gloquat C by a factor of between two and three. A synergistic effect is also produced by Coalite Aromatic Oil 131C and Shellsol R. The precise composition of these latter two oils is not known.

The results also indicate that the quality of the emulsion formed in water does not effect the biocidal activity of the composition. For example, hexane forms a poor emulsion but nevertheless enhances the activity of Gloquat C.

Example 10

The biocidal effectiveness of each of the following formulations was tested, using the aforementioned test, in order to establish the effects (if any) of the other ingredients present:

| | % (by weight) | | | |
|---|---|---|---|---|
| Gloquat C | 20 | 20 | - | 20 |
| Texofor M 6 | - | 8 | 8 | 8 |
| Texofor V 27 | - | - | 20 | - |
| Coalite Aromatic Oil 131 C | - | - | 67 | 67 |
| Pine Oil | - | 5 | 5 | 5 |
| Water | 80 | 67 | - | - |
| Bactericidal Figure | 1:500 | 1:500 | 1:75 | 1:1250 |

The results obtained clearly demonstrate two points:

i) The Coalite oil and the pine oil do not produce a significant level of biocidal activity in the absence of Gloquat C.

ii) The addition of the Coalite oil has a marked synergistic effect on the biocidal activity of Gloquat C.

Further examples are included to illustrate the synergistic effect on other quaternary biocides.

Example 11

The following biocides were tested in the following formulation, without the presence of a synergistic solvent.

| | % (by weight) |
|---|---|
| Quaternary Biocide | 20 |
| Texofor M6 | 8 |
| Pine Oil | 5 |
| Water | 67 |

Bactericidal figures for three quaternary biocides were:

| | |
|---|---|
| Morpan BC50 | 1:500 |
| Morpan CHSA | 1:400 |
| Morpan TPB | 1:400 |

In each of Examples 12-14 germicidal compositions were prepared according to the following general formulation:

| | % (by weight) |
|---|---|
| Quaternary Biocide | 20 |
| Texofor M6 | 8 |
| Pine Oil | 5 |
| Tetralin | 67 |

Example 12

Biocide: Morpan BC50

Chemical type : Benzylalkyldimethyl quaternary ammonium chloride.

Bactericidal figure : 1:1500

Appearance of formulation : Clear pale brown liquid, darkens on storage.

Emulsion appearance: Dense creamy white emulsion.

Example 13

Biocide : Morpan CHSA (Cetrimide B.P.)

Chemical type: Alkyl N,N,N-trimethyl-ammonium bromide.

Bactericidal figure: 1:1250

Appearance of formulation : Clear pale brown liquid, darkens on storage.

Emulsion appearance: Good white emulsion.

Example 14

Biocide : Morpan TPB

Chemical type: Alkyl pyridinium bromide.

Bactericidal figure: 1:1000

Appearance of formulation: Clear red-brown liquid.

Emulsion appearance: Pink emulsion.

APPENDIX I

British Standard Test BS:6471 for QAC Disinfectant Formulations

All the formulations were tested according to the following test protocol based on the British Standard test BS:6471 for QAC disinfectant formulations.

Test conditions: prepared in hard water (200 ppm hardness).

Test organism: *Escherichia coli* NCIB 9517.

Temperature: 22°C.

Contact time: 10 mins.

Organic matter added: 5% horse serum.

Inactivator: 3% Tween 80 + 2% lecithin.

Results: Concentration giving a mean kill of 99.99%.

APPENDIX II

BRITISH STANDARD SPECIFICATION FOR BLACK & WHITE DISINFECTANT FLUIDS. (BS 2462:1961)

Stability before dilution:- The fluid must remain homogeneous on standing at 0°C for one hour and on standing at 5 - 30°C for 3 months.

Stability after dilution:- All emulsions within the range 1-5% shall be stable when made up in hard water (200 ppm $CaCO_3$). Only trace separation of either top or bottom oil is allowed after 6 hours at the following temperatures:-

i) Fluids for non-tropical conditions : 18-22°C

ii) " " export to tropics: 22-37°C

CLAIMS

1. A germicidal composition, showing enhanced germicidal action, comprising a mixture of a quaternary ammonium compound and a hydrocarbon or halocarbon, or mixture of hydrocarbons and halocarbons.

2. A germicidal composition as claimed in claim 1, wherein the quaternary ammonium compound and the hydrocarbon or halocarbon, or mixture of hydrocarbons and halocarbons, are present in the mixture in a weight ratio of from 1:19 to 4:1.

3. A germicidal composition as claimed in claim 1 or claim 2, wherein the quaternary ammonium compound comprises dodecylbenzyl trimethyl ammonium chloride.

4. A germicidal composition as claimed in claim 1 or claim 2, wherein the quaternary ammonium compound comprises benzylalkyldimethyl quaternary ammonium chloride.

5. A germicidal composition as claimed in claim 1 or claim 2, wherein the quaternary ammonium compound comprises alkyl N,N,N-trimethyl-ammonium bromide.

6. A germicidal composition as claimed in claim 1 or claim 2, wherein the quaternary ammonium compound comprises alkyl pyridinium bromide.

7. A germicidal composition as claimed in any one of the preceding claims, wherein the hydrocarbon comprises a low molecular weight aliphatic, cycloaliphatic or aromatic hydrocarbon which enhances germicidal activity.

8. A germicidal composition as claimed in any one of the preceding claims, wherein the hydrocarbon comprises tetralin.

9. A germicidal composition as claimed in any one of claims 1 to 6, wherein the halocarbon comprises a low molecular weight halogenated aliphatic, halogenated cycloaliphatic or halogenated aromatic hydrocarbon which enhances germicidal activity.

10. A germicidal composition as claimed in claim 9, wherein the halogenated hydrocarbon comprises 1,1,1-trichlorethane or monochlorobenzene.

11. A germicidal composition as claimed in any one of the preceding claims, which also contains a surface active agent.

European Patent Office

# EUROPEAN SEARCH REPORT

0132963

Application number

EP 84 30 4477

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 694 663 (R.D. STAYNER) * column 1, line 43 - column 2, line 54 * | 1-8 | A 01 N 33/12<br>A 01 N 43/40 //<br>(A 01 N 33/12<br>A 01 N 29/04<br>A 01 N 29/02<br>A 01 N 27/00 )<br>(A 01 N 43/40<br>A 01 N 29/04<br>A 01 N 29/02<br>A 01 N 27/00 ) |
| X | US-A-3 595 975 (C. GAUVREAU ) * column 1, lines 30-44 * | 1,2,6 | |
| X | US-A-2 793 973 (N.D. CHERONIS) * column 1, line 60 - column 2, line 44; column 3, lines 59-74; column 4, lines 15-21, 55-67 * | 1,2,5, 7,9-11 | |
| X | FR-A-2 225 174 (FARBWERKE HOECHST) * claim 1; page 2, lines 10-19 * | 1,9-11 | TECHNICAL FIELDS SEARCHED (Int. Cl. 3) |
| X | FR-A-1 014 688 (ETS. GEOSYL) * page 2, left-hand column * | 1,9,10 | A 01 N |

The present search report has been drawn up for all claims

| Place of search | Date of completion of the search | Examiner |
|---|---|---|
| THE HAGUE | 18-10-1984 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document